# EUROPEAN PATENT APPLICATION

(11) **EP 2 426 616 A1**
(43) Date of publication of application: **07.03.2012**
(21) Application number: 11176907.1
(22) Date of filing: 09.08.2011
(51) Int. Cl.: G06F 21/00, H05K 1/02

(54) **Semiconductor integrated circuit device**

(30) Priority: 02.09.2010 JP 2010197146
(71) Applicant: Canon Kabushiki Kaisha, Tokyo 146-8501 (JP)
(72) Inventor: Oomura, Masanobu, Ohta-ku, Tokyo Tokyo 146-8501 (JP)
(74) Representative: TBK

(57) **Abstract**

A semiconductor integrated circuit device (100) including a semiconductor substrate (101) having a first surface on which a circuit block (106) is formed, and a second surface opposite to the first surface; a mounting board (150) on which the semiconductor substrate is mounted; an electrically conductive pattern (105) formed over a region (151) of the mounting substrate, which overlaps a portion to be protected of the circuit block; and a detection circuit configured to detect that the electrically conductive pattern has been altered is provided. The semiconductor substrate is mounted on the mounting board such that the second surface of the semiconductor substrate faces the mounting board.

## Description

### BACKGROUND OF THE INVENTION

### Field of the Invention

The present invention relates to a semiconductor integrated circuit device.

### Description of the Related Art

Demand has arisen for protecting, against physical alteration and analysis, a circuit mounted on a semiconductor integrated circuit device for holding data requiring high security such as personal information. In the semiconductor integrated circuit device described in Japanese Patent Laid-Open No. 2006-012159, a wiring line is formed on a circuit to be protected, and a power supply voltage is applied to a detection circuit of the semiconductor integrated circuit device via the wiring line. If the voltage applied via the wiring line is different from a normal voltage, the detection circuit determines that the wiring line has been altered. Also, in a semiconductor integrated circuit device described in Japanese Patent Laid-Open No. 07-200414, an integrated circuit chip is mounted such that the front side of the chip faces a mounting board. A power conductive line is formed in that region of the mounting board, on which the integrated circuit chip is to be mounted. If a hole for analyzing the circuit is formed in the mounting board from the front side of the integrated circuit chip, the stored contents of the integrated circuit chip disappear. Thus, it is difficult to perform analysis from the front surface of a semiconductor substrate, that is, the surface on which a circuit is formed.

### SUMMARY OF THE INVENTION

The latest analytical techniques can confirm a circuitry such as the operation state of a transistor from the back side of a semiconductor substrate. Examples of the method of analyzing a circuitry from the back side of a semiconductor substrate are an LVP (Laser Voltage Probing) method and a method using a back side emission microscope. The conventional semiconductor substrates have no measures against these back side analytical methods, so circuits formed on the semiconductor substrates are not sufficiently protected. Accordingly, one aspect of the present invention provides a technique of detecting that a circuit formed on the front side of a semiconductor substrate is analyzed from the back side of the substrate.

An aspect of the present invention provides a semiconductor integrated circuit device as specified in claims 1 to 9.

Further features of the present invention will become apparent from the following description of exemplary embodiments (with reference to the attached drawings).

### BRIEF DESCRIPTION OF THE DRAWINGS

The accompanying drawings, which are incorporated in and constitute a part of the specification, illustrate embodiments of the invention, and together with the description, serve to explain the principles of the invention.

Fig. 1 is a view for explaining an example of the arrangement of a semiconductor integrated circuit device of an embodiment of the present invention;

Fig. 2 is a view for explaining an example of a detailed configuration of a detection circuit of the embodiment of the present invention;

Figs. 3A and 3B are views for explaining examples of a detailed configuration of an oscillation circuit of the embodiment of the present invention;

Fig. 4 is a view for explaining an example of a timing chart of a counter circuit of the embodiment of the present invention;

Fig. 5 is a view for explaining an example of the circuit configuration of a comparison circuit of the embodiment of the present invention;

Figs. 6A to 6F are views for explaining modifications of the shape of an electrically conductive pattern 105 of the embodiment of the present invention;

Fig. 7 is a view for explaining an example of the detailed configuration of the detection circuit of the embodiment of the present invention;

Figs. 8A and 8B are views for explaining examples of a timing chart of the detection circuit of the embodiment of the present invention;

Fig. 9 is a view for explaining another configuration example of the detection circuit of the embodiment of the present invention;

Fig. 10 is a view for explaining another example of the timing chart of the embodiment of the present invention;

Fig. 11 is a view for explaining still another configuration example of the detection circuit of the embodiment of the present invention;

Fig. 12 is a view for explaining still another example of the timing chart of the embodiment of the present invention;

Fig. 13 is a view for explaining still another configuration example of the detection circuit of the embodiment of the present invention;

Figs. 14A to 14C are views for explaining examples of a timing chart of the embodiment of the present invention;

Fig. 15 is a view for explaining still another configuration example of the detection circuit of the embodiment of the present invention; and

Figs. 16A to 16C are views for explaining other examples of the timing chart of the embodiment of the present invention.

### DESCRIPTION OF THE EMBODIMENTS

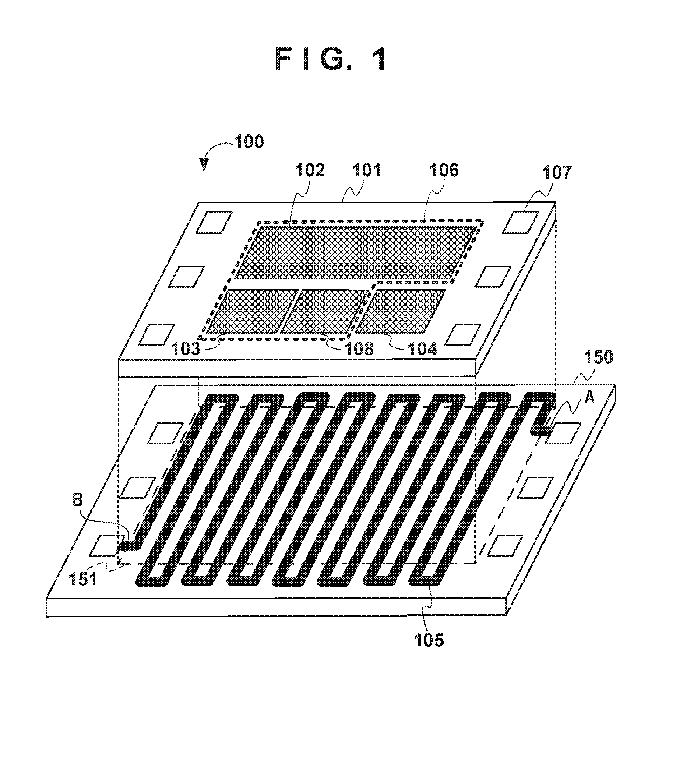

Embodiments of the present invention will be explained below with reference to the accompanying drawings. A configuration example of a semiconductor integrated circuit device 100 according to an embodiment of the present invention will be explained with reference to Fig. 1. The semiconductor integrated circuit device 100 can include a semiconductor substrate 101 and mounting board 150. A memory circuit 102, control circuit 103, processing circuit 108 and detection circuit 104 can be formed on the first surface (the upper surface in Fig. 1; to be also referred to as the front surface hereinafter) of the semiconductor substrate 101. The memory circuit 102 can include at least one of a nonvolatile memory and volatile memory, and hold data. The control circuit 103 is, for example, a CMOS logic circuit, and can control access of the processing circuit 108 to data held in the memory circuit 102. That is, the control circuit 103 can control write of data to
the memory circuit 102 by the processing circuit 108, and read of data from the memory circuit 102 by the processing circuit 108. The processing circuit 108 can process data held in the memory circuit 102, and output the generated data to, for example, an output device. The memory circuit 102, control circuit 103, and processing circuit 108 can form a circuit block 106. The circuit block 106 can be connected to an external device via terminals 107.

The semiconductor substrate 101 is mounted on a mounting region 151 of the mounting board 150. For the sake of explanation, Fig. 1 shows a state before the semiconductor substrate 101 is mounted on the mounting board 150. In this embodiment, the semiconductor substrate 101 is mounted on the mounting board 150 such that the second surface (the lower surface in Fig. 1; to be also referred to as the back surface hereinafter; the surface opposite to the first surface) of the semiconductor substrate 101 faces the mounting region 151. An electrically conductive pattern 105 is formed on the mounting region 151 of the mounting board 150. In the state in which the semiconductor substrate 101 is mounted on the mounting board 150, the electrically conductive pattern 105 covers the circuit block 106 from the back side of the semiconductor substrate 101. In the example shown in Fig. 1, the electrically conductive pattern 105 is a bent electrically conductive line, and meanders so as to be formed over the entire surface of the mounting region 151. The electrically conductive pattern 105 need not be formed on
the whole mounting region 151, and need at least be formed on a portion to be protected. For example, the electrically conductive pattern 105 may also be formed on a region of the mounting region 151, which overlaps a part or the whole of the circuit block 106. That is, the electrically conductive pattern 105 may be formed on only a region overlapping the memory circuit 102, a region overlapping the control circuit 103, or a region overlapping the processing circuit 108. The electrically conductive pattern 105 can also be formed densely so as to prevent a circuit to be protected from being analyzed through a spacing between the lines of the electrically conductive pattern 105. To increase the change in circuit constant before and after the alteration of the electrically conductive pattern 105, it is also possible to form the electrically conductive pattern 105 by the critical dimension of the manufacturing process of the semiconductor integrated circuit device 100. The electrically conductive pattern 105 can be formed on the front surface of the mounting board 150, and, when the mounting board 150 has a multilayer wiring structure, can also be formed in an interlayer of the multilayer wiring structure. Furthermore, the detection circuit 104 can be formed on the mounting board 150. In this case, the detection circuit 104 and control circuit 103 can be connected by wiring lines and wire bonding.

The detection circuit 104 is connected to the electrically conductive pattern 105 via wire bonding (not shown), and can detect that the electrically conductive pattern 105 has been altered. The alteration of the electrically conductive pattern 105 includes not only the removal of the electrically conductive pattern 105 and pattern changes such as a cut and a reconnection, but also the disconnection of the electrically conductive pattern 105 from the detection circuit 104 caused by the removal of the semiconductor substrate 101 from the mounting board 150. A detailed configuration of the detection circuit 104 and the connection between the detection circuit 104 and electrically conductive pattern 105 will be described later. The detection circuit 104 and control circuit 103 are connected by, for example, wiring lines and wire bonding, and the detection circuit 104 can output the detection result to the control circuit 103. If the detection circuit 104 detects that the electrically conductive pattern 105 has been altered, the control circuit 103 can prevent the processing circuit 108 from using data held in the memory circuit 102. For example, to prevent the use of data, the control circuit 103 can inhibit access of the processing circuit 108 to the memory circuit 102,
or reset data held in the memory circuit 102. Data reset herein mentioned is an operation of changing the state of the memory circuit 102 such that no data is held in it. Examples are data erase and random data overwrite. When the memory circuit 102 includes a volatile memory, the control circuit 103 may reset data by stopping power supply to the memory circuit 102.

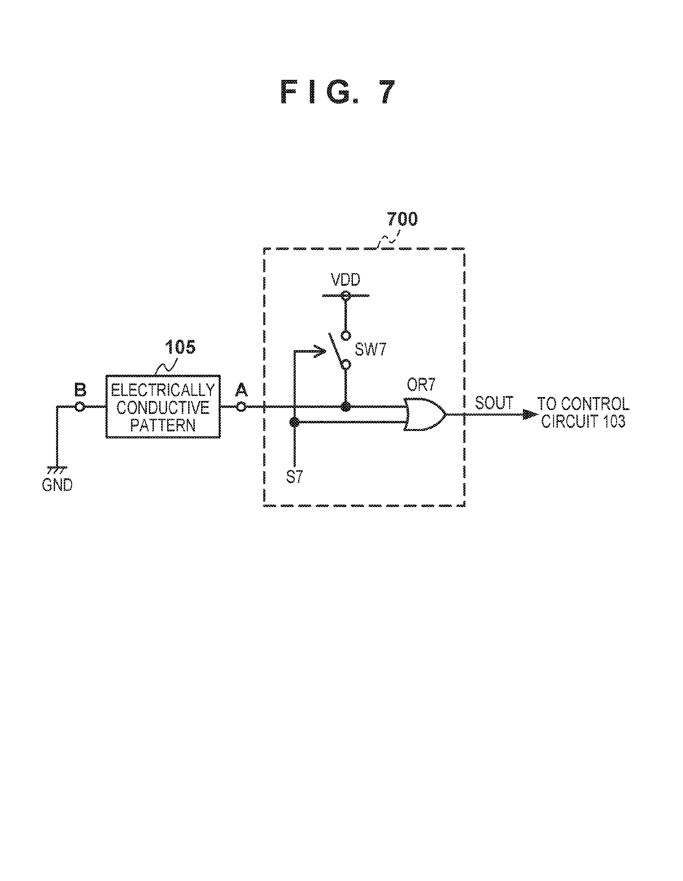

Next, an example of a detailed configuration of the detection circuit 104 will be explained with reference to Fig. 7. Fig. 7 shows a detection circuit 700 as an example of the detection circuit 104. The detection circuit 700 includes a switching circuit SW7 and OR circuit OR7. The switching circuit SW7 has one terminal connected to a point A (a first portion) of the electrically conductive pattern 105, and the other terminal connected to a voltage source VDD. A point B (a second portion) of the electrically conductive pattern 105 is connected to a reference potential line. The reference potential line is, for example, a ground GND, but may also be another potential. The points A and B of the electrically conductive pattern 105 shown in Fig. 7 respectively correspond to points A and B of the electrically conductive pattern 105 shown in Fig. 1. A control signal S7 controls ON/OFF of the switching circuit SW7. The OR circuit OR7 has one input portion connected to the point A of the electrically conductive pattern 105, and the other input portion to which the control signal S7 is supplied. The output portion of the OR circuit OR7 is connected to the control circuit 103, and supplies an output signal SOUT of the OR circuit OR7 to the control circuit 103.

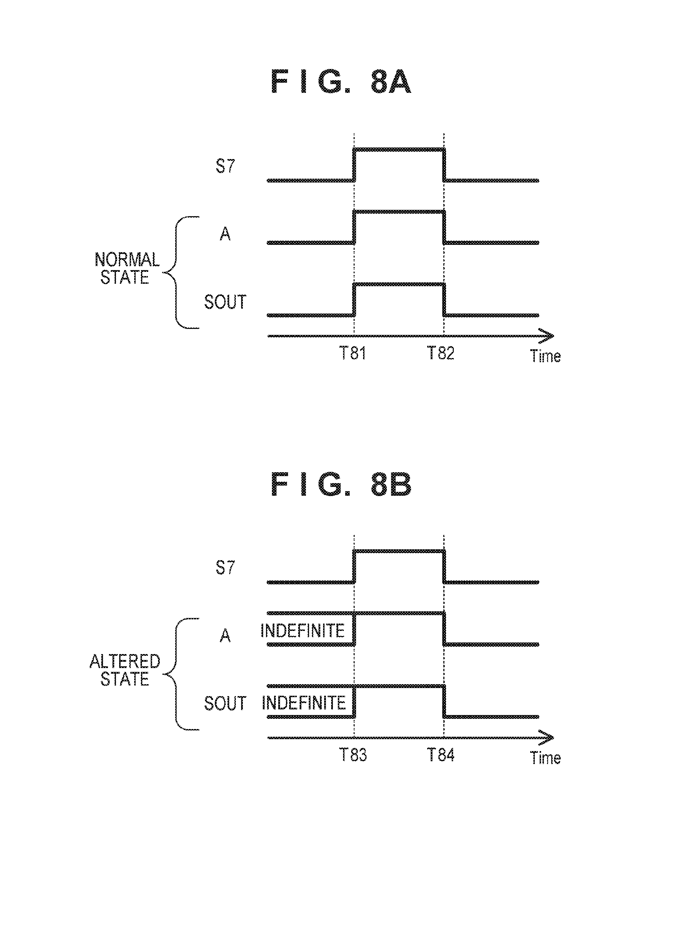

The operation of the detection circuit 700 will be explained below with reference to timing charts shown in Figs. 8A and 8B. Fig. 8A explains the behavior of the output signal SOUT in a normal state, that is, when the electrically conductive pattern 105 is not altered. Fig. 8B explains the behavior of the output signal SOUT after the electrically conductive pattern 105 is altered.

When the electrically conductive pattern 105 is not altered, as shown in Fig. 8A, the control signal S7 is Low before time T81, so the switching circuit SW7 is OFF. Consequently, the point A of the electrically conductive pattern 105 is not connected to the voltage source VDD. Also, the point B of the electrically conductive pattern 105 is connected to the reference potential line, and the points A and B of the electrically conductive pattern 105 are connected via the electrically conductive pattern 105. As a consequence, the voltage at the point A of the electrically conductive pattern 105 becomes Low, and the output signal SOUT from the OR circuit OR7 also becomes Low. When the control signal S7 changes from Low to High at time T81, the switching circuit SW7 is turned on, and the point A of the electrically conductive pattern 105 is connected to the voltage source VDD. Accordingly, the voltage at the point A of the electrically conductive pattern 105 changes from Low to High, and the output signal SOUT from the OR circuit OR7 also changes from Low to High. A time corresponding to the time constant of the electrically conductive pattern 105 is necessary before the voltage at the point A of the electrically conductive pattern 105 becomes equal to VDD after the switching circuit SW7 is turned on. To simplify the explanation, however, Fig. 8 shows that the voltage at the point A of the electrically conductive pattern 105 immediately changes from Low to High at time T81. This similarly applies to times T82 to T84 to be described below.

When the control signal S7 changes from High to Low at time T82, the switching circuit SW7 is turned off. Therefore, the point A of the electrically conductive pattern 105 is disconnected from the voltage source VDD. Since, however, the point B is kept connected to the reference potential line, the voltage at the point A changes from High to Low. Consequently, both the input signals to the OR circuit OR7 become Low, so the output signal SOUT from the OR circuit OR7 also becomes Low. Thus, when the output signal SOUT changes from High to Low, the detection circuit 700 can detect that the electrically conductive pattern 105 has not been altered.

An operation when the electrically conductive pattern 105 is altered will now be explained with reference to Fig. 8B. Assume that the semiconductor substrate 101 is removed from the mounting board 150 or the electrically conductive pattern 105 is partially cut by forming a hole in the mounting board 150, in order to analyze the circuit block 106 from the back surface of the semiconductor substrate 101.

If the electrically conductive pattern 105 is altered as described above, as shown in Fig. 8B, the control signal S7 is Low before time T83, so the switching circuit SW7 is OFF. Consequently, the point A of the electrically conductive pattern 105 is not connected to the voltage source VDD. On the other hand, since the electrically conductive pattern 105 is cut or removed, the point A of the electrically conductive pattern 105 is unaffected by the reference potential line connected to the point B of the electrically conductive pattern 105. Accordingly, the voltage at the point A of the electrically conductive pattern 105 is indefinite, so the output signal SOUT from the OR circuit OR7 is also indefinite.

When the control signal S7 changes from Low to High at time T83, the switching circuit SW7 is turned on, and the point A of the electrically conductive pattern 105 is connected to the voltage source VDD. Therefore, the voltage at the point A of the electrically conductive pattern 105 changes from Low to High, and the output signal SOUT from the OR circuit OR7 also changes from Low to High.

When the control signal S7 changes from High to Low at time T84, the switching circuit SW7 is turned off. Accordingly, the point A of the electrically conductive pattern 105 is disconnected from the voltage source VDD. Since the point A of the electrically conductive pattern 105 is not connected to the reference potential line, the voltage at the point A remains High, and the output signal SOUT from the OR circuit OR7 also remains High. Thus, when the output signal SOUT remains unchanged from High, the detection circuit 700 can detect that the electrically conductive pattern 105 has been altered.

As described above, whether the electrically conductive pattern 105 is altered can be detected by determining whether the voltage at the point A of the electrically conductive pattern 105 changes when the switching circuit SW7 is turned off. This makes it possible to detect that the circuit formed on the front side of the semiconductor substrate is analyzed from its back side.

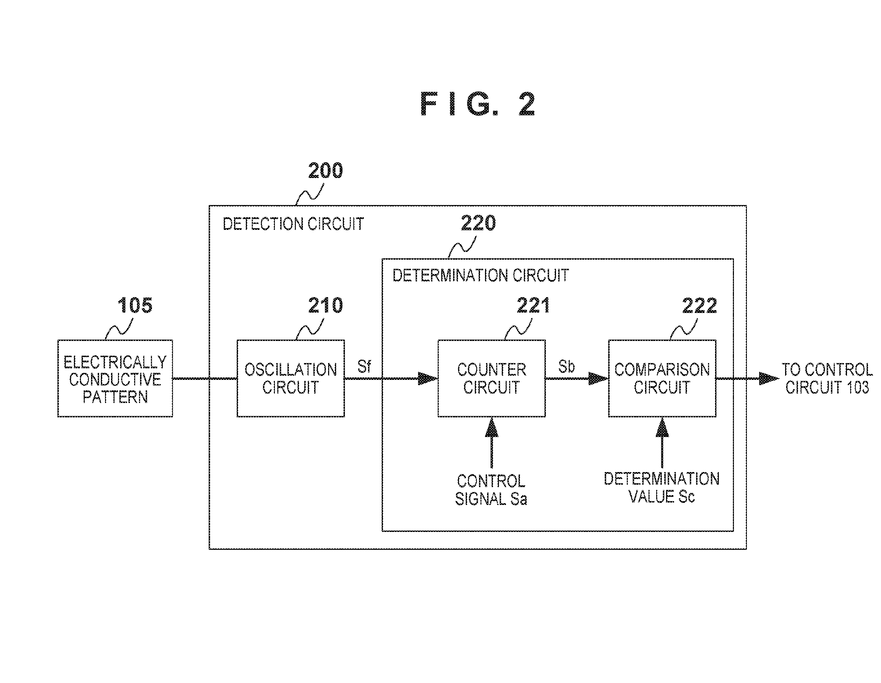

Next, another example of the detailed configuration of the detection circuit 104 will be explained with reference to Fig. 2. Fig. 2 shows a detection circuit 200 as another example of the detection circuit 104. The detection circuit 200 can include an oscillation circuit 210 and determination circuit 220. The determination circuit 220 can include a counter circuit 221 and comparison circuit 222. The oscillation circuit 210 is connected to the electrically conductive pattern 105, and oscillates at an oscillation frequency determined by the circuit constant of the electrically conductive pattern 105. The circuit constant of the electrically conductive pattern 105 includes a parasitic resistance value and parasitic capacitance value of the electrically conductive pattern 105. An output signal Sf from the oscillation circuit 210 is supplied to the counter circuit 221. A control signal Sa is also supplied to the counter circuit 221, and the counter circuit 221 counts the oscillation frequency while the control signal Sa is High. A count Sb obtained by the counter circuit 221 is supplied to the comparison circuit 222. A determination value Sc is also supplied to the comparison circuit 222, and the comparison circuit 222 can determine whether a range defined by the determination value Sc includes the count Sb. The pulse width of the control signal Sa and the determination value Sc can be preset. For example, these values can be set and held in the detection circuit 200 when the semiconductor integrated circuit device 100 is manufactured, and can also be set when a user starts using the semiconductor integrated circuit device 100 after it is shipped. When the user freely sets the pulse width of the control signal Sa and the determination value Sc, the user can hold reference information of these values in the memory circuit 102, and the control circuit 103 can generate the pulse width of the control signal Sa and the determination value Sc based on the information. The nonvolatile memory of the memory circuit 102 may also hold the pulse width of the control signal Sa and the determination value Sc. In this case, the pulse width of the control signal Sa and the determination value Sc cannot be used any longer if the electrically conductive pattern 105 is altered. However, it is still possible to hold these values in the memory circuit 102, because the user perhaps discards the semiconductor integrated circuit device 100 in which the electrically conductive pattern 105 is altered.

If the range of the determination value Sc includes the count Sb, the detection circuit 200 detects that the electrically conductive pattern 105 has not been altered, and outputs the detection result to the control circuit 103. If the range of the determination value Sc does not include the count Sb, the detection circuit 200 detects that the electrically conductive pattern 105 has been altered, and outputs the detection result to the control circuit 103.

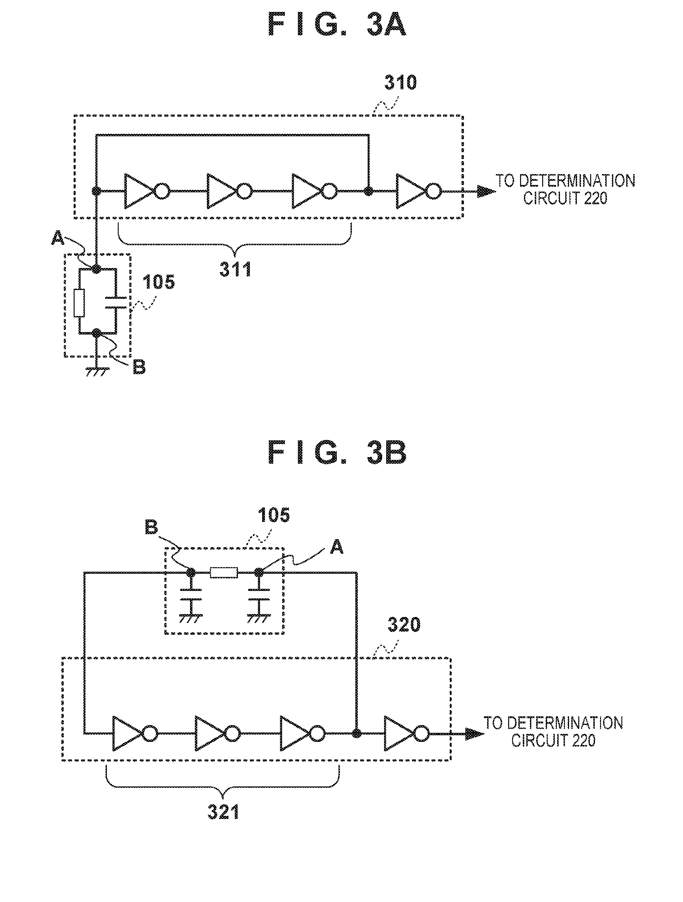

Two examples of a detailed configuration of the oscillation circuit 210 will be explained below with reference to Figs. 3A and 3B. Figs. 3A and 3B both show a configuration in which the oscillation circuit includes a ring oscillator circuit, and differ from each other in the connection between the oscillation circuit and electrically conductive pattern 105. Points A and B of the electrically conductive pattern 105 shown in Figs. 3A and 3B respectively correspond to the points A and B of the electrically conductive pattern 105 shown in Fig. 1.

An oscillation circuit 310 shown in Fig. 3A includes a ring oscillator circuit 311 in which a plurality of and an odd number of (for example, three) inverter circuits are connected in the form of a ring. Of the inverter circuits forming the ring oscillator circuit 311, the input terminal of the first inverter circuit (on the left side of Fig. 3A) is connected to the point A (a first portion) of the electrically conductive pattern 105. Also, the point B (a second portion) of the electrically conductive pattern 105 is connected to a reference potential line (for example, GND). In this arrangement, the resistance component and capacitance component of the electrically conductive pattern 105 can be regarded as they are connected in parallel between the points A and B. Of the inverter circuits forming the ring oscillator circuit 311, the output terminal of the last inverter circuit (on the right side of Fig. 3A) is connected to the determination circuit 220 via an inverter circuit.

An oscillation circuit 320 shown in Fig. 3B includes a ring oscillator circuit 321 in which a plurality of odd-numbered (for example, three) inverter circuits are connected in the form of a ring via the electrically conductive pattern 105. Of the inverter circuits forming the ring oscillator circuit 321, the input terminal of the first inverter circuit (on the left side of Fig. 3B) is connected to the point B (the second portion) of the electrically conductive pattern 105. Also, of the inverter circuits forming the ring oscillator circuit 321, the output terminal of the last inverter circuit (on the right side of Fig. 3B) is connected to the point A (the first portion) of the electrically conductive pattern 105. In this arrangement, the resistance component of the electrically conductive pattern 105 can be regarded as being connected between the points A and B, and the capacitance component can be regarded as being connected between the reference potential line and the points A and B. Of the inverter circuits forming the ring oscillator circuit 321, the output terminal of the last inverter circuit (on the right side of Fig. 3B) is connected to the determination circuit 220 via an inverter circuit.

Regardless of whether the oscillation circuit 210 has the configuration shown in Fig. 3A or 3B, the circuit constant of the electrically conductive pattern 105 determines the oscillation frequency. Accordingly, the oscillation frequency of the oscillation circuit 210 changes if the electrically conductive pattern 105 is altered. For example, the oscillation frequency of the oscillation circuit 310 shown in Fig. 3A increases if the electrically conductive pattern 105 is removed or cut. Also, the oscillation circuit 320 shown in Fig. 3B stops operating if the electrically conductive pattern 105 is removed or cut, because the loop of the ring oscillator circuit 321 is cut. As a consequence, the oscillation frequency becomes zero. The oscillation circuit 210 is not limited to a circuit using the ring oscillator circuit, and may also be a circuit using a Schmitt trigger circuit or a circuit using a multi-vibrator circuit.

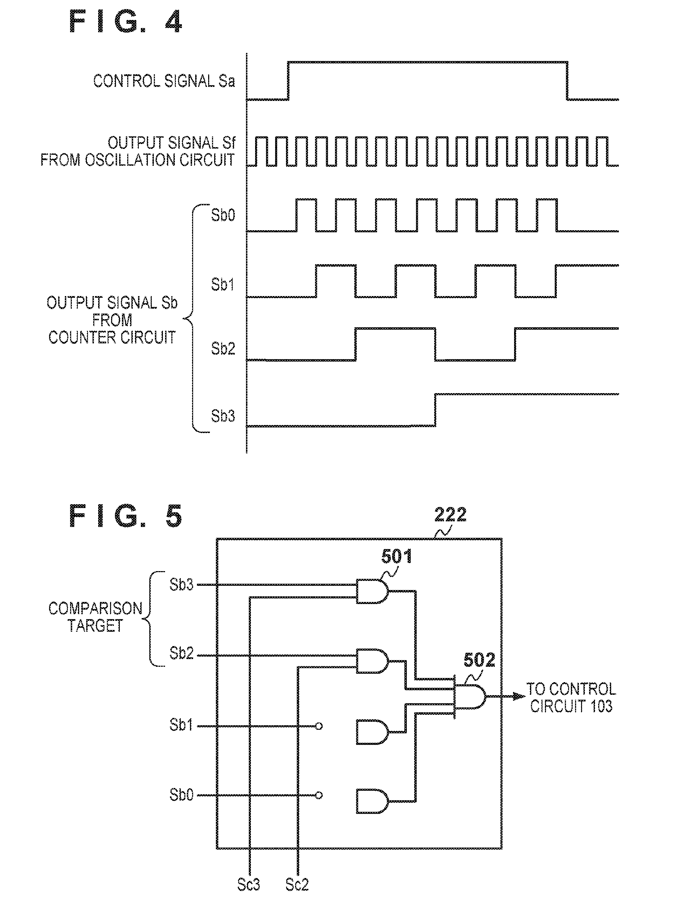

An example of a timing chart of the counter circuit 221 will be explained below with reference to Fig. 4. Fig. 4 shows a four-bit operation of the counter circuit 221 as an example. As described previously, the control signal Sa and the signal Sf from the oscillation circuit 210 are supplied to the counter circuit 221. Based on these signals, the counter circuit 221 counts the number of times the signal Sf changes from Low to High while the control signal Sa is High. As a result, the count Sb is output. In the example shown in Fig. 4, the count Sb is output as four-bit signals Sb0 to Sb3. Sb0 represents the least significant bit of the count Sb, and Sb3 represents the most significant bit of the count Sb. Although not shown, the signals Sb0 to Sb3 are reset to Low after counting is complete, that is, after the control signal Sa becomes Low.

An example of the circuit configuration of the comparison circuit 222 will be explained below with reference to Fig. 5. The counts Sb0 to Sb3 described above and bits Sc2 and Sc3 forming the determination value Sc are supplied to the comparison circuit 222. In the example shown in Fig. 5, the comparison circuit 222 determines whether the range defined by the determination value Sc includes the count by comparing the upper two bits of the count Sb with the determination value Sc. Both Sb3 and Sc3 are supplied to an AND circuit 501, and the output from the AND circuit 501 is input to an AND circuit 502. This similarly applies to Sb2 and Sc2. Sb1 and Sb0 are discarded. The output from the AND circuit 502 is input as a detection result to the control circuit 103.

If Sb3 and Sc3 match and Sb2 and Sc2 match, the output from the AND circuit 502 becomes High. This represents that the detection circuit 200 detects that the electrically conductive pattern 105 has not been altered. If the values of at least one of these pairs do not match, the output from the AND circuit 502 becomes Low. This represents that the detection circuit 200 detects that the electrically conductive pattern 105 has been altered. The number of values included in the range defined by the determination value Sc can be increased or decreased by increasing or decreasing the number of comparison target bits of the count Sb. For example, to determine whether the count Sb is included in a range having four values, bits other than the lower two bits of the count Sb need only be compared with the determination value Sc. To determine whether the count Sb is included in a range having one value, that is, whether the count Sb matches a predetermined value, all the bits of the count Sb are compared with the determination value Sb.
The number of bits forming the determination value Sc depends on the number of comparison target bits of the count Sb.

In the above-described detection circuit 200, the control signal Sa is supplied to the counter circuit 221. Instead, the control signal Sa may be supplied to the oscillation circuit 210. For example, it is also possible to replace one of the plurality of inverter circuits forming the ring oscillator circuit with one NAND circuit, and supply the control signal Sa to this NAND circuit. In this case, the ring oscillator circuit does not oscillate while the control signal Sa is Low, and oscillates while the control signal Sa is High.

As described above, the detection circuit 200 can be formed by only logic circuits by using the ring oscillator circuit in the oscillation circuit 210, and the counter circuit 221 and the comparison circuit 222 formed by the AND circuit in the determination circuit 220. It is possible to make the analysis of the circuit configuration more difficult by separately laying out these logic circuits on the semiconductor substrate 101.

The detection circuit 200 shown in Fig. 2 detects the alteration of the electrically conductive pattern 105 based on the change in oscillation frequency determined by the circuit constant of the electrically conductive pattern 105. Even when using a processing apparatus such as an FIB apparatus, it is very difficult to alter the electrically conductive pattern while maintaining its circuit constant. Therefore, the alteration of the electrically conductive pattern can be detected more accurately, and as a consequence the security of data held in the semiconductor integrated circuit device can be improved.

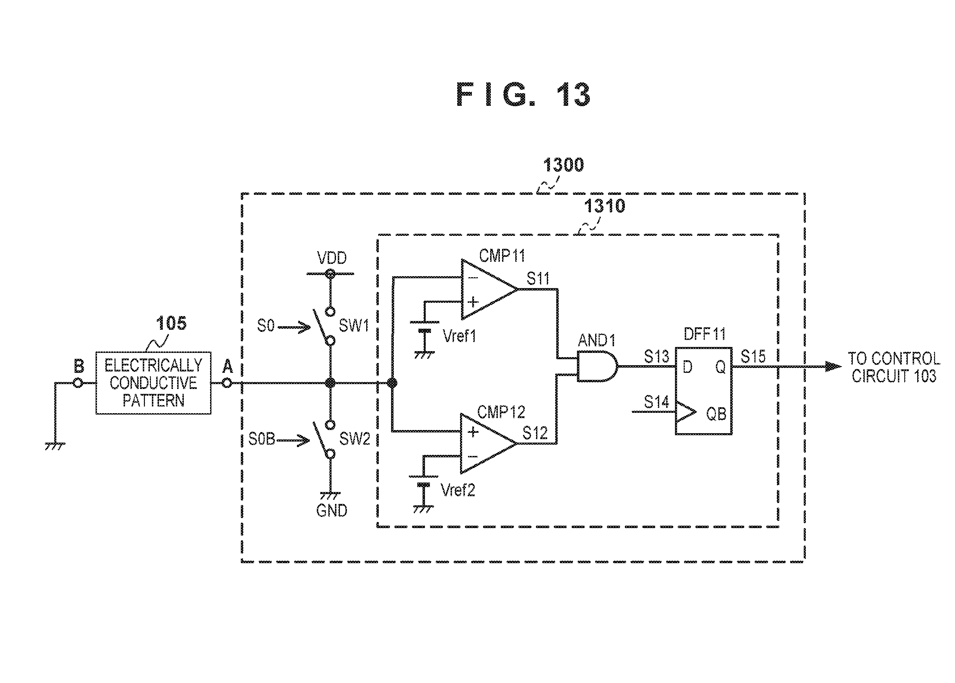

A detailed configuration of the detection circuit 104 will be explained below with reference to Fig. 13. Fig. 13 shows a detection circuit 1300 as an example of the detection circuit 104. The detection circuit 1300 includes two switching circuits SW1 and SW2 and a determination circuit 1310. The switching circuit SW1 has one terminal connected to a point A (a first portion) of the electrically conductive pattern 105, and the other terminal connected to a voltage source VDD that functions as a current supply line. The switching circuit SW2 has one terminal connected to the point A of the electrically conductive pattern 105, and the other terminal connected to a reference potential line. The reference potential line is, for example, a ground GND, but may also be another potential. A point B (a second portion) of the electrically conductive pattern 105 is connected to the reference potential line. The points A and B of the electrically conductive pattern 105 shown in Fig. 13 respectively correspond to the points A and B of the electrically conductive pattern 105 shown in Fig. 1. The determination circuit 1310 is connected to the point A of the electrically conductive pattern 105, and detects the change in voltage at the point A. More specifically, the detection circuit 1300 resets the potential at the point A to the reference potential, connects the point A to the voltage source VDD, and determines whether a preset range includes a voltage V1 at the point A after the elapse of a predetermined time. If the preset range includes the voltage V1, the detection circuit 1300 can detect that the electrically conductive pattern 105 has not been altered. On the other hand, if the preset range does not include the voltage V1, the detection circuit 1300 can detect that the electrically conductive pattern 105 has been altered.

The determination circuit 1310 includes two voltage comparators CMP11 and CMP12, an AND circuit AND1, and a D flip-flop circuit DFF11. The voltage comparator CMP11 has a positive input terminal connected to a reference voltage Vref1, and a negative input terminal connected to the point A of the electrically conductive pattern 105. An output signal S11 from the voltage comparator CMP11 is input to the AND circuit AND1. The voltage comparator CMP12 has a positive input terminal connected to the point A of the electrically conductive pattern 105, and a negative input terminal connected to a reference voltage Vref2. An output signal S12 from the voltage comparator CMP12 is input to the AND circuit AND1. Assume that Vref1 is higher than Vref2 in the example shown in Fig. 13. An output signal S13 from the AND circuit AND1 is input to the data input terminal of the D flip-flop circuit DFF11. A control signal S14 is input to the clock input terminal of the D flop-flop circuit DFF11. An output signal S15 from Q of the D flip-flop circuit DFF11 is input to the control circuit 103 as an output from the detection circuit 1300. The reference voltages Vref1 and Vref2 may be voltages generated by a DA converter mounted on the semiconductor substrate 101, and may also be voltages input from outside the semiconductor substrate 101.

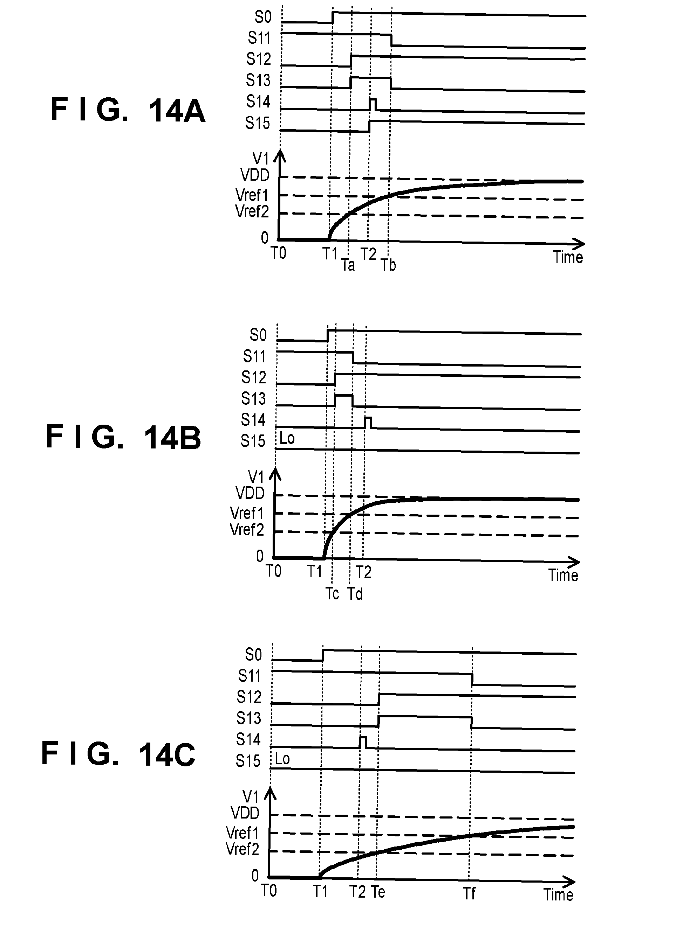

The operation of the detection circuit 1300 will be explained below with reference to timing charts shown in Figs. 14A to 14C. In each of Figs. 14A to 14C, the upper half represents the state of each signal, and the lower half represents the change in voltage V1 at the point A of the electrically conductive pattern 105 with the elapse of time. Fig. 14A is an example of a timing chart for explaining the operation of the detection circuit 1300 when the electrically conductive pattern 105 is not altered.

Control signals S0 and SOB respectively control ON/OFF of the switching circuits SW1 and SW2. The control signal SOB is an inverted signal of the control signal S0. Therefore, the control signal SOB is omitted from the timing charts. At time T0, the control signal S0 is Low, and the control signal SOB is High. Accordingly, the switching circuit SW1 is turned off, and the switching circuit SW2 is turned on. As a consequence, the voltage V1 at the point A of the electrically conductive pattern 105 is reset to the reference potential. That is, the switching circuit SW2 can function as a resetting unit for resetting the voltage V1 to the reference potential. The switching circuit SW2 can be omitted when the point B of the electrically conductive pattern 105 is connected to the reference potential line. When the switching circuit SW1 is turned off in this case, the point A of the electrically conductive pattern 105 is also reset to the reference potential after the elapse of a predetermined time because the electrically conductive pattern 105 is connected to the reference potential line.

When the control signal S0 changes from Low to High at time T1, the switching circuit SW1 is turned on, and the switching circuit SW2 is turned off. Consequently, the voltage source VDD supplies an electric current to the point A of the electrically conductive pattern 105 via the switching circuit SW1. That is, the switching circuit SW1 can function as a connecting unit for connecting the point A of the electrically conductive pattern 105 to the voltage source VDD. After that, the voltage V1 at the point A of the electrically conductive pattern 105 starts gradually increasing toward the voltage value supplied by the voltage source VDD, in accordance with a time constant determined by the circuit constant of the electrically conductive pattern 105. The circuit constant of the electrically conductive pattern 105 includes the parasitic resistance value and parasitic capacitance value of the electrically conductive pattern 105.

When the voltage V1 reaches the reference voltage Vref2 (at time Ta), the output signal S12 from the voltage comparator CMP12 changes from Low to High. At time Ta, the voltage V1 is lower than the reference voltage Vref1, so the output signal S11 from the voltage comparator CMP11 remains High. Accordingly, the output signal S13 from the AND circuit AND1 changes from Low to High. When the control signal S14 changes from Low to High at time T2, the output signal S15 from the D flip-flop circuit DFF11 changes from Low to High because the output signal S13 from the AND circuit AND1 is High. When the voltage V1 reaches the reference voltage Vref1 (at time Tb), the output signal S11 from the voltage comparator CMP11 changes from High to Low. As a consequence, the output signal S13 from the AND circuit AND1 changes from High to Low. As described above, the output signal S15 from the detection circuit 1300 becomes High after time T2. This indicates that the detection circuit 1300 detects that the electrically conductive pattern 105 has not been altered.

Time T2 is preset to exist between the time (Ta) at which the voltage V1 reaches the reference voltage Vref2 and the time (Tb) at which the voltage V1 reaches the reference voltage Vref1 when the electrically conductive pattern 105 is not altered. Accordingly, it is detected that the electrically conductive pattern 105 has not been altered if the value of the voltage V1 is equal to or higher than the reference voltage Vref2 and equal to or lower than the reference voltage Vref1 at time T2.

The operation of the detection circuit 1300 when the electrically conductive pattern 105 is altered and the time constant determined by the circuit constant of the electrically conductive pattern 105 becomes smaller than that before the alteration will be explained below with reference to Fig. 14B.
As described previously, at time T1, the control signal S0 changes from Low to High, and the voltage V1 starts gradually increasing. Since the time constant of the electrically conductive pattern 105 is smaller than that before the alteration, the voltage V1 increases faster than that before the alteration of the electrically conductive pattern 105.

When the voltage V1 reaches the reference voltage Vref2 (at time Tc), the output signal S12 from the voltage comparator CMP12 changes from Low to High. At time Tc, the voltage V1 is lower than the reference voltage Vref1, so the output signal S11 from the voltage comparator CMP11 remains High. Therefore, the output signal S13 from the AND circuit AND1 changes from Low to High. Then, before time T2, the voltage V1 reaches the reference voltage Vref1 (at time Td), and the output signal S11 from the voltage comparator CMP11 changes from High to Low. As a consequence, the output signal S13 from the AND circuit AND1 changes from High to Low. When the control signal S14 changes from Low to High at time T2, the output signal S15 from the D flip-flop circuit DFF11 remains Low because the output signal S13 from the AND circuit AND1 is Low. As described above, the output signal S15 from the detection circuit 1300 remains Low even after time T2. This demonstrates that the detection circuit 1300 detects that the electrically conductive pattern 105 has been altered. That is, it is detected that the electrically conductive pattern 105 has been altered if the value of the voltage V1 exceeds the reference voltage Vref1 at time T2.

The operation of the detection circuit 1300 when the electrically conductive pattern 105 is altered and the time constant determined by the circuit constant of the electrically conductive pattern 105 becomes larger than that before the alteration will be explained below with reference to Fig. 14C.
As described previously, at time T1, the control signal S0 changes from Low to High, and the voltage V1 starts gradually increasing. Since the time constant of the electrically conductive pattern 105 is larger than that before the alteration, the voltage V1 increases more slowly than that before the alteration of the electrically conductive pattern 105.

Time T2 comes before the voltage V1 reaches the reference voltage Vref2, and the control signal S14 changes from Low to High. Since the output signal S13 from the AND circuit AND1 is Low, the output signal S15 from the D flop-flop circuit DFF11 remains Low. When the voltage V1 reaches the reference voltage Vref2 (at time Te), the output signal S12 from the voltage comparator CMP12 changes from Low to High. At time Te, the voltage V1 is lower than the reference voltage Vref1, so the output signal S11 from the voltage comparator CMP11 remains High. Therefore, the output signal S13 from the AND circuit AND1 changes from Low to High. Then, the voltage V1 reaches the reference voltage Vref1 (at time Tf), and the output signal S11 from the voltage comparator CMP11 changes from High to Low. As a consequence, the output signal S13 from the AND circuit AND1 changes from High to Low. As described above, the output signal S15 from the detection circuit 1300 remains Low even after time T2. This shows that the detection circuit 1300 detects that the electrically conductive pattern 105 has been altered. That is, it is detected that the electrically conductive pattern 105 has been altered if the value of the voltage V1 is lower than the reference voltage Vref2 at time T2.

The reference voltages Vref1 and Vref2 and times T1 and T2 used by the detection circuit 1300 can be set when designing the semiconductor integrated circuit device 100, can be set when manufacturing the semiconductor integrated circuit device 100, and can also be set personally by the user after shipment. These set values can be held in the detection circuit 104, and can also be held in the nonvolatile memory of the memory circuit 102. When the set values are held in the memory circuit 102, they cannot be used any longer if the electrically conductive pattern 105 is altered. However, it is still possible to hold these set values in the memory circuit 102, because the user perhaps discards the semiconductor integrated circuit device 100 in which the electrically conductive pattern 105 is altered.

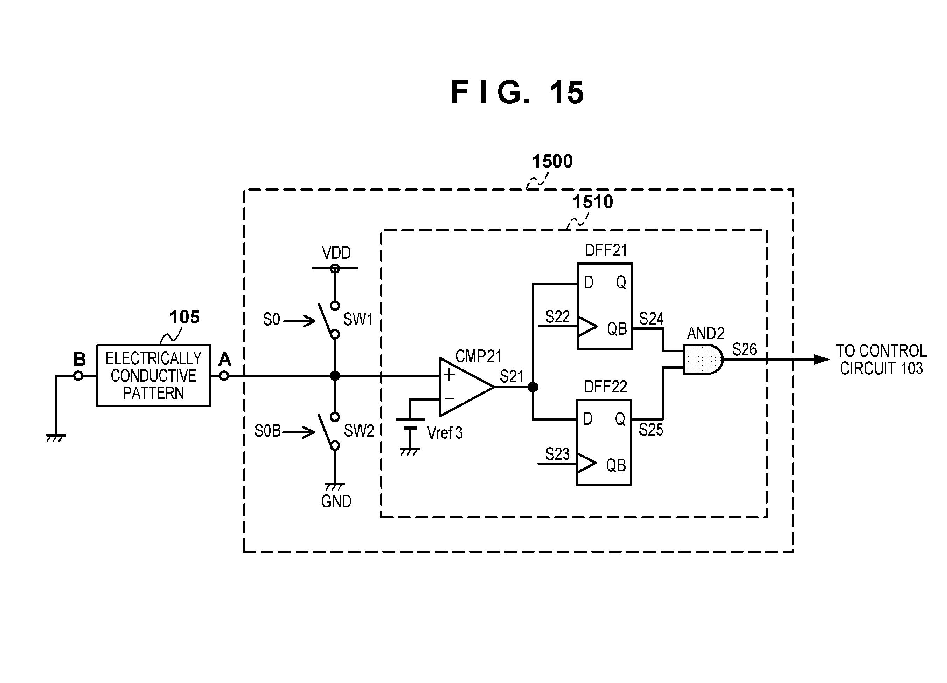

Another example of the detailed configuration of the detection circuit 104 will now be explained with reference to Fig. 15. Fig. 15 shows a detection circuit 1500 as another example of the detection circuit 104. The detection circuit 1500 is obtained by replacing the determination circuit 1310 of the detection circuit 1300 with a determination circuit 1510. Therefore, the arrangement of the determination circuit 1510 will be explained below.

The determination circuit 1510 includes a voltage comparator CMP21, an AND circuit AND2, and two D flip-flop circuits DFF21 and DFF22. The voltage comparator CMP21 has a positive input terminal connected to the point A of the electrically conductive pattern 105, and a negative input terminal connected to a reference voltage Vref3. An output signal S21 from the voltage comparator CMP21 is input to the data input terminals of the D flip-flop circuits DFF21 and DFF22. A control signal S22 is input to the clock input terminal of the D flip-flop circuit DFF21. A control signal S23 is input to the clock input terminal of the D flip-flop circuit DFF22. An output signal S24 from QB of the D flip-flop circuit DFF21 and an output signal S25 from Q of the D flip-flop circuit DFF22 are input to the AND circuit AND2. An output signal S26 from the AND circuit AND2 is input to the control circuit 103 as an output from the detection circuit 1500. The reference voltage Vref3 may be a voltage generated by a DA converter mounted on the semiconductor substrate 101, and may also be a voltage input from outside the semiconductor substrate 101.

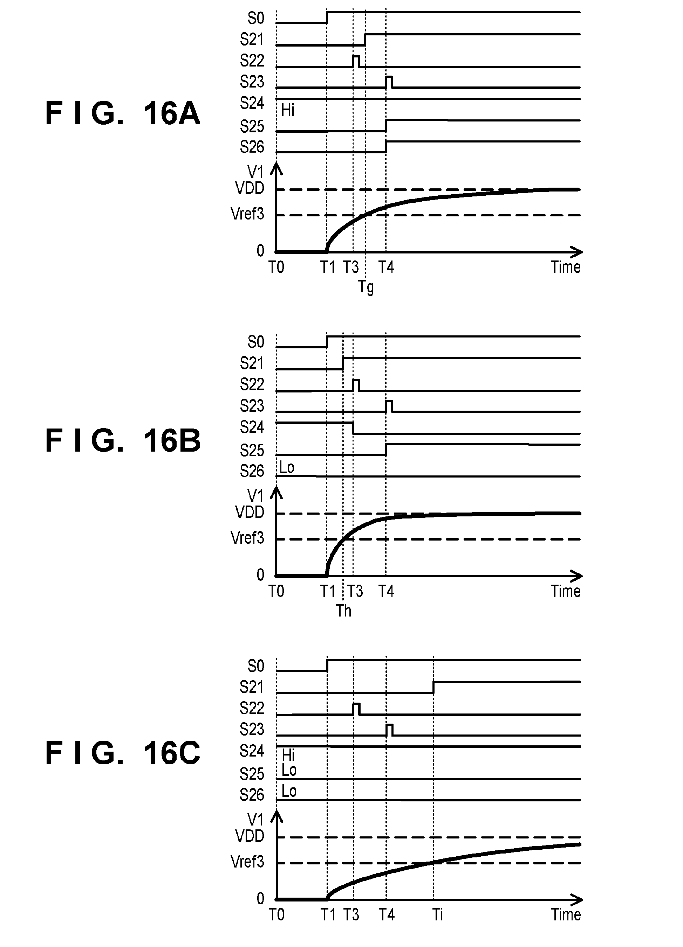

The operation of the detection circuit 1500 will be explained below with reference to timing charts shown in Figs. 16A to 16C. In each of Figs. 16A to 16C, the upper half represents the state of each signal, and the lower half represents the change in voltage V1 at the point A of the electrically conductive pattern 105 with the elapse of time. Fig. 16A is an example of a timing chart for explaining the operation of the detection circuit 1500 when the electrically conductive pattern 105 is not altered. The operations of the switching circuits SW1 and SW2 are the same as those shown in Figs. 14A to 14C, so a repetitive explanation will be omitted.

When the control signal S0 changes from Low to High at time T1, the switching circuit SW1 is turned on, and the switching circuit SW2 is turned off. Consequently, the voltage source VDD supplies an electric current to the point A of the electrically conductive pattern 105 via the switching circuit SW1. After that, the voltage V1 at the point A of the electrically conductive pattern 105 starts gradually increasing toward the voltage value supplied by the voltage source VDD, in accordance with the time constant determined by the circuit constant of the electrically conductive pattern 105. At time T1, the output signal S21 from the voltage comparator CMP21 is Low, the output signal S24 from QB of the D flip-flop circuit DFF21 is High, and the output signal S25 from Q of the D flip-flop circuit DFF22 is Low. Therefore, the output signal S26 from the AND circuit AND2 is Low.

At time T3, the control signal S22 changes from Low to High. Since the output signal S21 is Low, the output signal S24 from QB of the D flip-flop circuit DFF21 remains High. When the voltage V1 reaches the reference voltage Vref3 (at time Tg), the output signal S21 from the voltage comparator CMP21 changes from Low to High. At time T4, the control signal S23 changes from Low to High. Since the output signal S21 is High, the output signal S25 from Q of the D flip-flop circuit DFF22 changes from Low to High. Accordingly, the output signal S26 from the AND circuit AND2 also changes from Low to High. As described above, the output signal S26 from the detection circuit 1500 becomes High after time T4. This indicates that the detection circuit 1500 detects that the electrically conductive pattern 105 has not been altered.

Times T3 and T4 are preset such that the time (Tg) at which the voltage V1 reaches the reference voltage Vref3 when the electrically conductive pattern 105 is not altered exists between times T3 and T4. Therefore, it is detected that the electrically conductive pattern 105 has not been altered if the reference voltage Vref3 is equal to or higher than the voltage V1 at time T3 and equal to or lower than the voltage V1 at time T4.

The operation of the detection circuit 1500 when the electrically conductive pattern 105 is altered and the time constant determined by the circuit constant of the electrically conductive pattern 105 becomes smaller than that before the alteration will be explained below with reference to Fig. 16B. As described previously, at time T1, the control signal S0 changes from Low to High, and the voltage V1 starts gradually increasing. Since the time constant of the electrically conductive pattern 105 is smaller than that before the alteration, the voltage V1 increases faster than that before the alteration of the electrically conductive pattern 105.

When the voltage V1 reaches the reference voltage Vref3 (at time Th), the output signal S21 from the voltage comparator CMP21 changes from Low to High. Since the time constant is smaller than that before the alteration, time Tg is earlier than preset time T3. At time T3, the control signal S22 changes from Low to High. Since the output signal S21 is High, the output signal S24 from QB of the D flip-flop circuit DFF21 changes from High to Low. At time T4, the control signal S23 changes from Low to High. Since the output signal S21 is High, the output signal S25 from Q of the D flip-flop circuit DFF22 changes from Low to High. As described above, the output signal S26 from the detection circuit 1500 remains Low even after time T4. This represents that the detection circuit 1500 detects that the electrically conductive pattern 105 has been altered. Accordingly, it is detected that the electrically conductive pattern 105 has been altered if the reference voltage Vref3 is lower than the voltage V1 at time T3.

The operation of the detection circuit 1500 when the electrically conductive pattern 105 is altered and the time constant determined by the circuit constant of the electrically conductive pattern 105 becomes larger than that before the alteration will be explained below with reference to Fig. 16C.
As described previously, at time T1, the control signal S0 changes from Low to High, and the voltage V1 starts gradually increasing. Since the time constant of the electrically conductive pattern 105 is larger than that before the alteration, the voltage V1 increases more slowly than that before the alteration of the electrically conductive pattern 105.

At time T3, the control signal S22 changes from Low to High. Since the output signal S21 is Low, the output signal S24 from QB of the D flip-flop circuit DFF21 remains High. At time T4, the control signal S23 changes from Low to High. Since the output signal S21 is Low, the output signal S25 from Q of the D flip-flop circuit DFF22 remains Low. When the voltage V1 reaches the reference voltage Vref3 (at time Ti), the output signal S21 from the voltage comparator CMP21 changes from Low to High. Since the time constant is larger than that before the alteration, time Ti is later than preset time T4. As described above, the output signal S26 from the detection circuit 1500 remains Low even after time T4. This shows that the detection circuit 1500 detects that the electrically conductive pattern 105 has been altered. Accordingly, it is detected that the electrically conductive pattern 105 has been altered if the reference voltage Vref3 is higher than the voltage V1 at time T4.

The reference voltage Vref3 and times T1, T3, and T4 used by the detection circuit 1500 can be set when designing the semiconductor integrated circuit device 100, can be set when manufacturing the semiconductor integrated circuit device 100, and can also be set personally by the user after shipment. These set values can be held in the detection circuit 104, and can also be held in the nonvolatile memory of the memory circuit 102.

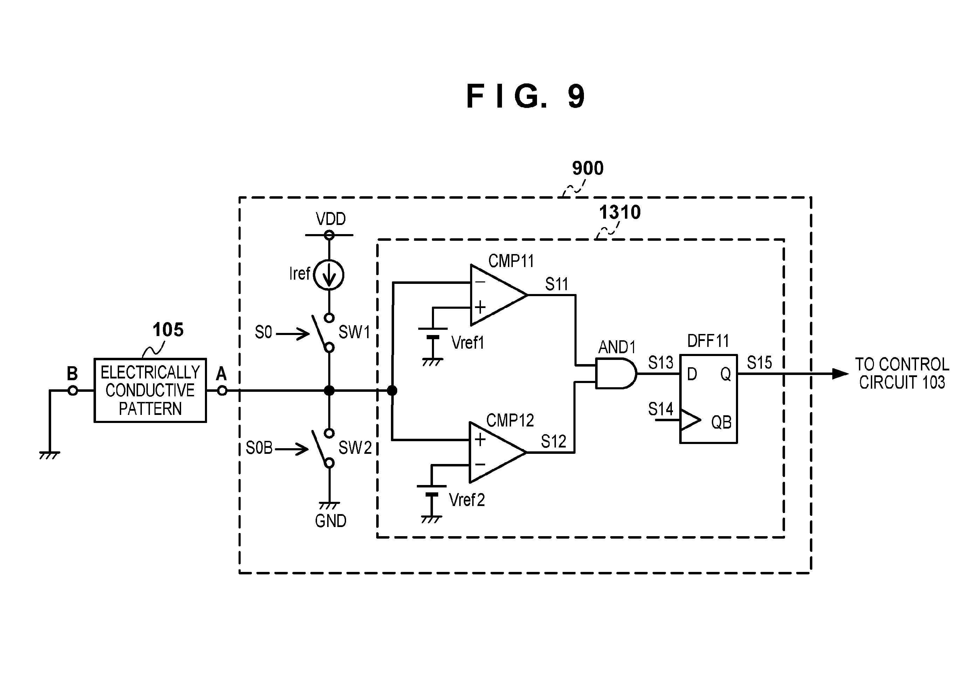

Another example of the detailed configuration of the detection circuit 104 will be explained below with reference to Fig. 9. Fig. 9 shows a detection circuit 900 as another example of the detection circuit 104. The detection circuit 900 is obtained by connecting a current source Iref between the switching circuit SW1 and voltage source VDD in the detection circuit 1300 shown in Fig. 13. In the detection circuit 900, the product of the resistance value of the electrically conductive pattern 105 and the output current from the current source Iref determines the convergent voltage of the voltage V1 at the point A of the electrically conductive pattern 105. Therefore, the voltage V1 is less affected by the voltage fluctuation of the voltage source VDD than that in the detection circuit 1300 shown in Fig. 13. This makes it possible to decrease the difference between the reference voltages Vref1 and Vref2, and increase the detection accuracy.

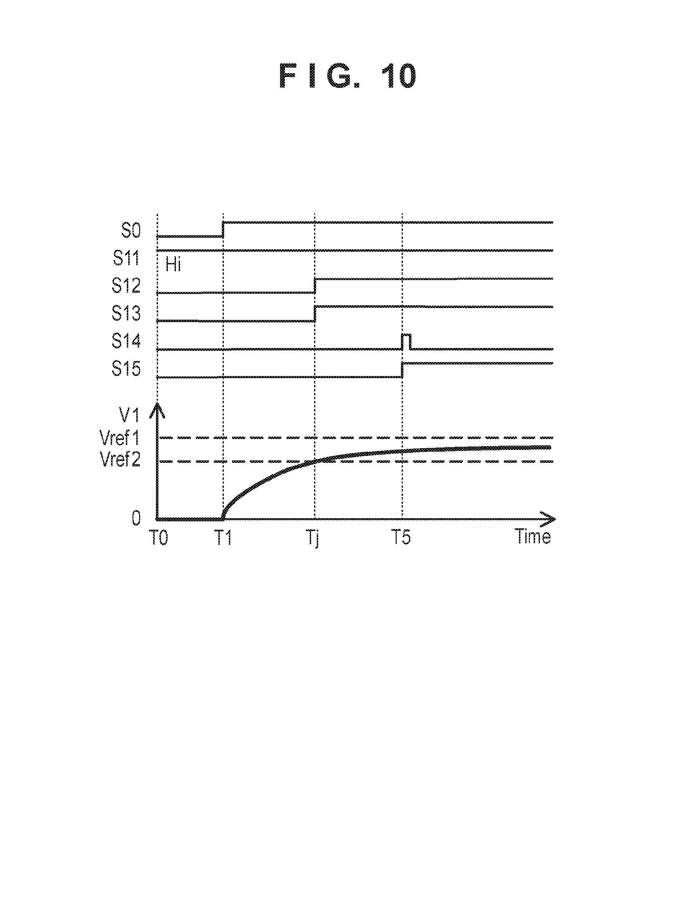

The operation of the detection circuit 900 will be explained below with reference to a timing chart shown in Fig. 10. In Fig. 10, the upper half represents the state of each signal, and the lower half represents the change in voltage V1 at the point A of the electrically conductive pattern 105 with the elapse of time. Fig. 10 is an example of a timing chart for explaining the operation of the detection circuit 900 when the electrically conductive pattern 105 is not altered. The operation of the detection circuit 900 when the electrically conductive pattern 105 is altered is the same as those shown in Figs. 14B and 14C, so a repetitive explanation will be omitted.

Similar to Fig. 14A, when the control signal S0 changes from Low to High at time T1, the switching circuit SW1 is turned on, and the switching circuit SW2 is turned off. Consequently, the current source Iref that functions as a current supply line supplies an electric current to the point A of the electrically conductive pattern 105 via the switching circuit SW1. After that, the voltage V1 at the point A of the electrically conductive pattern 105 starts gradually increasing toward the voltage determined by the parasitic resistance value of the electrically conductive pattern 105 and the current value of the current source Iref, in accordance with the time constant determined by the circuit constant of the electrically conductive pattern 105.

When the voltage V1 reaches the reference voltage Vref2 (at time Tj), the output signal S12 from the voltage comparator CMP12 changes from Low to High. At time Tj, the voltage V1 is lower than the reference voltage Vref1, so the output signal S11 from the voltage comparator CMP11 remains High. Accordingly, the output signal S13 from the AND circuit AND1 changes from Low to High. When the control signal S14 changes from Low to High at time T5, the output signal S15 from the D flip-flop circuit DFF11 changes from Low to High because the output signal S13 from the AND circuit AND1 is High. As described above, the output signal S15 from the detection circuit 900 becomes high after time T5. This demonstrates that the detection circuit 900 detects that the electrically conductive pattern 105 has not been altered. Thus, it is detected that the electrically conductive pattern 105 has not been altered if the voltage V1 at time T5 is equal to or higher than the reference voltage Vref2 and equal to or lower than the reference voltage Vref1. The time from time T1 to time T5 can be set to such an extent that the value of the voltage V1 converges.

If the electrically conductive pattern 105 is altered and its parasitic resistance value decreases, the convergent voltage of the voltage V1 becomes lower than the reference voltage Vref2. On the other hand, if the electrically conductive pattern 105 is altered and its parasitic resistance value increases, the convergent voltage of the voltage V1 becomes higher than the reference voltage Vref1. In either case, the output signal S15 from the detection circuit 900 becomes Low at time T5, so it is detected that the electrically conductive pattern 105 has been altered.

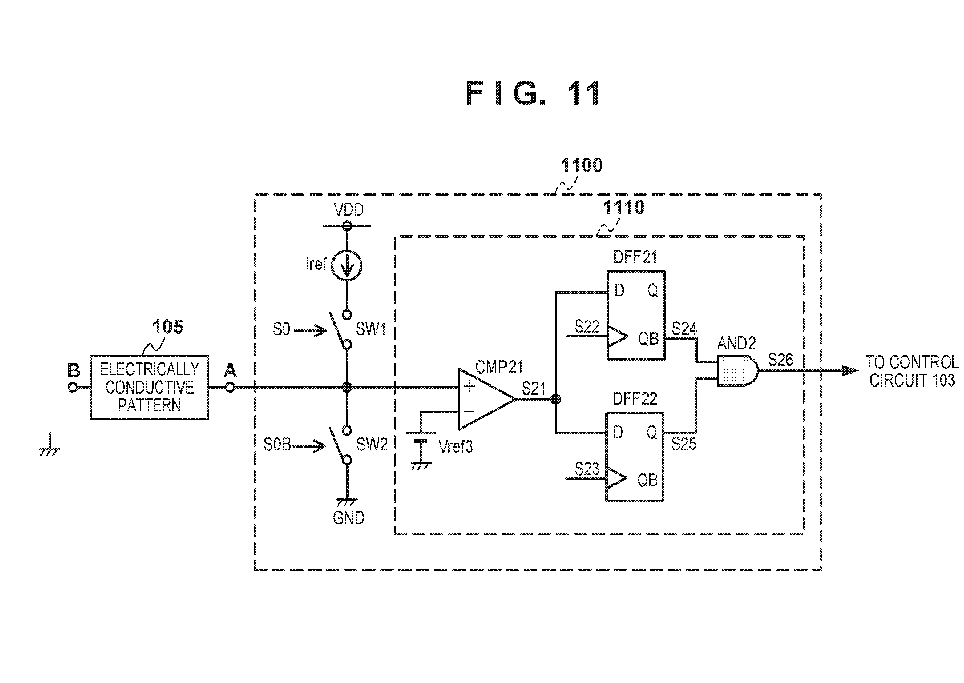

Another example of the detailed configuration of the detection circuit 104 will be explained below with reference to Fig. 11. Fig. 11 shows a detection circuit 1100 as another example of the detection circuit 104. The detection circuit 1100 is obtained by connecting the switching circuit SW1 and voltage source VDD via a current source Iref and floating the point B of the electrically conductive pattern 105 in the detection circuit 1500 shown in Fig. 15. The arrangement of a determination circuit 1110 is the same as that of the determination circuit 1510. Since the point B of the electrically conductive pattern 105 floats, the voltage V1 at the point A of the electrically conductive pattern 105 linearly increases with time in accordance with condition CV = IT where C is the parasitic capacitance value of the electrically conductive pattern 105, I is the current value of the current source Iref, and T is the time elapsed since the switching circuit SW1 is turned on. Since the voltage V1 linearly increases with time T, the voltage V1 is less influenced by the fluctuation of the voltage source VDD than that in the detection circuit 1500. This makes it possible to shorten the interval between the times at which pulses are supplied to the D flip-flop circuits DFF21 and DFF22, and increase the detection accuracy.

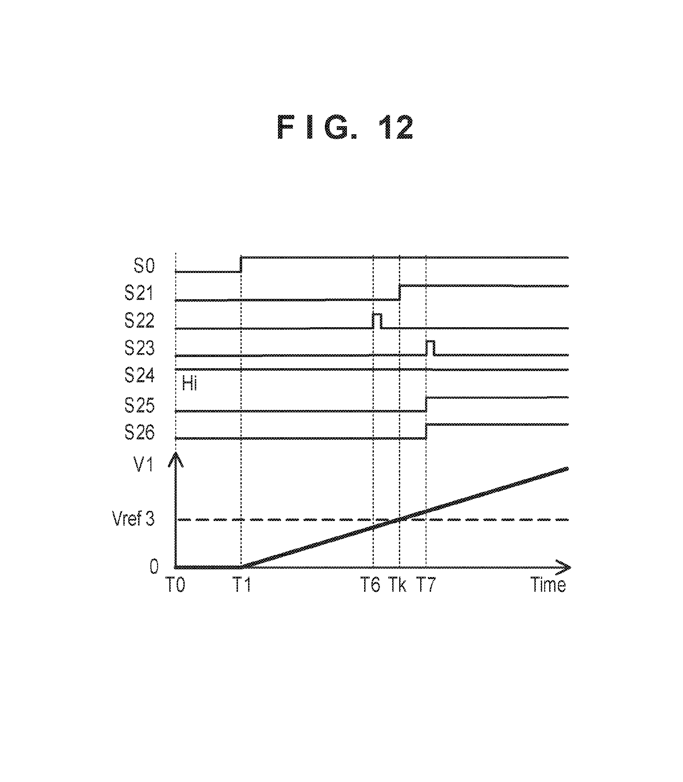

The operation of the detection circuit 1100 will be explained below with reference to a timing chart shown in Fig. 12. In Fig. 12, the upper half represents the state of each signal, and the lower half represents the change in voltage V1 at the point A of the electrically conductive pattern 105 with the elapse of time. Fig. 12 is an example of a timing chart for explaining the operation of the detection circuit 1100 when the electrically conductive pattern 105 is not altered. The operation of the detection circuit 1100 when the electrically conductive pattern 105 is altered is the same as those shown in Figs. 16B and 16C, so a repetitive explanation will be omitted.

When the control signal S0 changes from Low to High at time T1, the switching circuit SW1 is turned on, and the switching circuit SW2 is turned off. Consequently, the current source Iref supplies an electric current to the point A of the electrically conductive pattern 105 via the switching circuit SW1. After that, the voltage V1 at the point A of the electrically conductive pattern 105 starts linearly increasing in accordance with condition CV = IT described above. At time T1, the output signal S21 from the voltage comparator CMP21 is Low, the output signal S24 from QB of the D flip-flop circuit DFF21 is High, and the output signal S25 from Q of the D flip-flop circuit DFF22 is Low. Therefore, the output signal S26 from the AND circuit AND2 is Low.

At time T6, the control signal S22 changes from Low to High. Since the output signal S21 is Low, the output signal S24 from QB of the D flip-flop circuit DFF21 remains High. When the voltage V1 reaches the reference voltage Vref3 (at time Tk), the output signal S21 from the voltage comparator CMP21 changes from Low to High. At time T7, the control signal S23 changes from Low to High. Since the output signal S21 is High, the output signal S25 from Q of the D flip-flop circuit DFF22 changes from Low to High. Accordingly, the output S26 from the AND circuit AND2 also changes from Low to High. As described above, the output signal S26 from the detection circuit 1500 becomes High after time T7. This represents that the detection circuit 1100 detects that the electrically conductive pattern 105 has not been altered.

Times T6 and T7 are preset such that the time (Tk) at which the voltage V1 reaches the reference voltage Vref3 when the electrically conductive pattern 105 is not altered exists between T6 and T7. Accordingly, it is detected that the electrically conductive pattern 105 has not been altered if the reference voltage Vref3 is equal to or higher than the voltage V1 at time T6 and equal to or lower than the voltage V1 at time T7.

If the electrically conductive pattern 105 is altered and its parasitic capacitance value decreases, the increase ratio (dV1/dt) per unit time of the voltage V1 increases. On the other hand, if the electrically conductive pattern 105 is altered and its parasitic capacitance value increases, the increase ratio (dV1/dt) per unit time of the voltage V1 decreases. In either case, the output signal S15 from the detection circuit 1100 becomes Low at time T7, so it is detected that the electrically conductive pattern 105 has been altered.

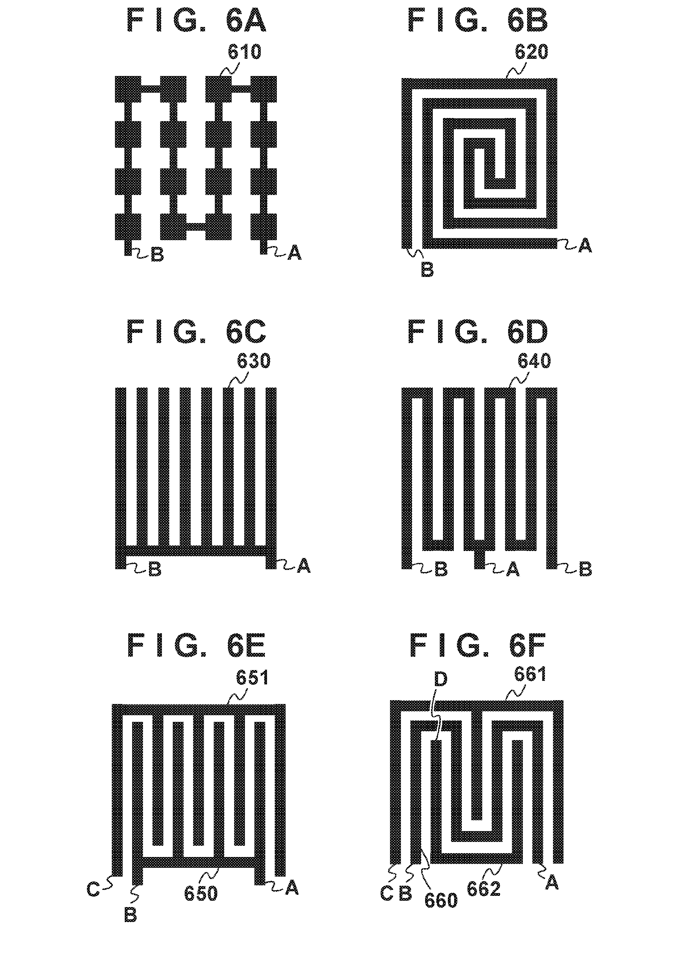

Next, modifications of the shape of the electrically conductive pattern 105 will be explained below with reference to Figs. 6A to 6F. All electrically conductive patterns to be explained below can be formed by the critical dimension of the semiconductor process of manufacturing the semiconductor integrated circuit device 100. Also, points A and B of each electrically conductive pattern respectively correspond to the points A and B of the electrically conductive pattern 105 shown in Fig. 1.

An electrically conductive pattern 610 shown in Fig. 6A has a shape in which a plurality of rectangular patterns are connected by electrically conductive lines thinner than the rectangular patterns. The electrically conductive pattern 610 can increase the parasitic capacitance while suppressing the increase in parasitic resistance. The plurality of rectangular patterns may have different sizes. An electrically conductive pattern 620 shown in Fig. 6B has a pattern that spirally extends from the point A positioned in the outer periphery toward the central portion, and then spirally extends from the central portion toward the point B positioned in the outer periphery. An electrically conductive pattern 630 shown in Fig. 6C has a comb-shaped pattern. An electrically conductive pattern 640 shown in Fig. 6D has a pattern in which one electrically conductive line meanders. The point A is positioned near the center of this electrically conductive line, and the point B is positioned at each of the two ends. An electrically conductive pattern 650 shown in Fig. 6E has a comb shape and is meshed with an electrically conductive pattern 651 having another comb shape. A point C of the electrically conductive pattern 651 is connected to a reference potential line (for example, GND). This arrangement can increase the parasitic capacitance of the electrically conductive pattern 650. An electrically conductive pattern 660 shown in Fig. 6F has a pattern in which one electrically conductive line meanders, and electrically conductive patterns 661 and 662 are arranged parallel to the electrically conductive pattern 660. A point C of the electrically conductive pattern 661 and a point D of the electrically conductive pattern 662 are connected to a reference potential line (for example, GND). This arrangement can increase the parasitic capacitance of the electrically conductive pattern 650.

In the various embodiments described above, it is possible to detect the alteration of an electrically conductive pattern, which is performed to analyze, from the back side of a semiconductor substrate, circuits formed on the front side of the substrate. This makes it possible to detect that the circuits formed on the front side of the semiconductor substrate are analyzed from its back side. Consequently, the security of data held in a semiconductor integrated circuit device can be improved. It is also possible to perform protection against analysis from the front side of the semiconductor substrate, in addition to the above-described protection against analysis from the back side. This protection from the front side can be performed by using the existing techniques, and can also be performed by forming the above-described electrically conductive pattern on the circuits formed on the semiconductor substrate, and detecting the alteration of the electrically conductive pattern as described above.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.
A semiconductor integrated circuit device (100) including a semiconductor substrate (101) having a first surface on which a circuit block (106) is formed, and a second surface opposite to the first surface; a mounting board (150) on which the semiconductor substrate is mounted; an electrically conductive pattern (105) formed over a region (151) of the mounting substrate, which overlaps a portion to be protected of the circuit block; and a detection circuit configured to detect that the electrically conductive pattern has been altered is provided. The semiconductor substrate is mounted on the mounting board such that the second surface of the semiconductor substrate faces the mounting board.

## Claims

1. A semiconductor integrated circuit device (100) comprising:
a semiconductor substrate (101) having a first surface on which a circuit block (106) is formed, and a second surface opposite to the first surface;
a mounting board (150) on which the semiconductor substrate is mounted;
an electrically conductive pattern (105) formed over a region (151) of the mounting substrate, which overlaps a portion to be protected of the circuit block; and
a detection circuit configured to detect that the electrically conductive pattern has been altered,
wherein the semiconductor substrate is mounted on the mounting board such that the second surface of the semiconductor substrate faces the mounting board.

2. The device according to claim 1, wherein
the circuit block comprises:
a memory circuit configured to hold data; and
a control circuit configured to control access to the data held in the memory circuit, and
the control circuit is further configured to perform one of an operation of resetting the data held in the memory circuit, and an operation of inhibiting access to the data held in the memory circuit, if it is detected that the electrically conductive pattern has been altered.

3. The device according to claim 1 or 2, wherein
the detection circuit comprises a switching circuit configured to switch a state in which a first portion of the electrically conductive pattern is connected to a voltage source, and a state in which the first portion is not connected to the voltage source,
a second portion of the electrically conductive pattern is connected to a reference potential line, and
the detection circuit is further configured to determine whether a voltage of the first portion has changed when the state in which the first portion is connected to the voltage source changes to the state in which the first portion is not connected to the voltage source, and to detect that the electrically conductive pattern has been altered if the voltage of the first portion has not changed.

4. The device according to claim 1 or 2, wherein
the detection circuit comprises an oscillation circuit connected to the electrically conductive pattern, and configured to oscillate at an oscillation frequency determined by a circuit constant of the electrically conductive pattern, and
the detection circuit is further configured to determine whether a preset range includes the oscillation frequency of the oscillation circuit, and to detect that the electrically conductive pattern has been altered if the preset range does not include the oscillation frequency.

5. The device according to claim 1 or 2, further comprising:
resetting means configured to reset a potential of a first portion of the electrically conductive pattern to a reference potential; and
connecting means configured to connect the first portion to a current source,
wherein the detection circuit is further configured to determine whether a preset range includes a voltage of the first portion when a predetermined time has elapsed since the first portion is connected to the current source after the potential of the first portion is reset to the reference potential, and to detect that the electrically conductive pattern has been altered if the preset range does not include the voltage after the elapse of the predetermined time, and
a change in voltage of the first portion depends on a circuit constant of the electrically conductive pattern.

6. The device according to claim 1 or 2, wherein
the detection circuit comprises:
connecting means configured to connect a first portion of the electrically conductive pattern to a current source; and
resetting means configured to reset the first portion to a reference potential,
the detection circuit is further configured to determine whether a preset range includes a voltage of the first portion when a predetermined time has elapsed since the current source is connected to the first portion after the first portion is reset to the reference potential, and to detect that the electrically conductive pattern has been altered if the preset range does not include the voltage after the elapse of the predetermined time, and
a change in voltage of the first portion depends on a circuit constant of the electrically conductive pattern.

7. The device according to claim 6, wherein a second portion of the electrically conductive pattern is connected to a reference potential line.

8. The device according to claim 6, wherein the electrically conductive pattern is floated after the potential of the first portion is reset to the reference potential.

9. The device according to any one of claims 4 to 8, wherein the circuit constant includes a parasitic resistance and parasitic capacitance of the electrically conductive pattern.
